# EUROPEAN PATENT SPECIFICATION

(11) **EP 2 752 999 B1**
(45) Date of publication and mention of the grant of the patent: **07.03.2018**
(21) Application number: 13150163.7
(22) Date of filing: 03.01.2013
(51) Int. Cl.: H04B 5/00, H04B 5/02

(54) **Mobile wireless communications device including NFC antenna matching control circuit and associated methods**
Mobile drahtlose Kommunikationsvorrichtung mit Steuerschaltung für Nahfeldkommunikationsantennenanpassung und zugehörige Verfahren
Dispositif de communication sans fil mobile comprenant un circuit de commande d'adaptation d'antenne NFC et procédés associés

(43) Date of publication of application: 09.07.2014
(73) Proprietor: BlackBerry Limited, Waterloo, ON N2K 0A7 (CA)
(72) Inventor: Zhu, Lizhong, Waterloo, Ontario, N2L 3W8 (CA); Zhu, Libo, Waterloo, Ontario, N2L 3W8 (CA); Gondosch, Robert Michael Philip, Waterloo, Ontario, N2L 3W8 (CA); Mackenzie, Craig Stuart, Waterloo, Ontario, N2L 3W8 (CA)
(74) Representative: Bryn-Jacobsen, Caelia

(56) References cited:
- WO-A1-2012/143936
- WO-A2-2007/109451
- US-A1- 2010 060 432
- US-A1- 2012 135 681
- US-A1- 2012 214 412
- GORLICK M M: "Electric suspenders: a fabric power bus and data network for wearable digital devices", WEARABLE COMPUTERS, 1999. DIGEST OF PAPERS. THE THIRD INTERNATIONAL SY MPOSIUM ON SAN FRANCISCO, CA, USA 18-19 OCT. 1999, LOS ALAMITOS, CA, USA,IEEE COMPUT. SOC, US, 18 October 1999 (1999-10-18), pages 114-121, XP032391413, DOI: 10.1109/ISWC.1999.806684 ISBN: 978-0-7695-0428-5

## Description

### Technical Field

The present disclosure generally relates to the field of wireless communications systems, and, more particularly, to mobile wireless communications devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

WO2012/143936 discloses a smart dynamic radiation pattern optimising system is a design and technique to actively shape & optimise the radiation pattern of mobile device controlled by smart RF/Antenna system with signal processing capability that works by sensing the change in device proximity environment with nature or property, orientation, position, location with signal quality parameters to protect the user by controlling radiation exposure, enhance RF signal quality and to save battery power. Mobile devices are handled in different proximity environment which influence the antenna performance due to electromagnetic interaction based on environments properties that leads to detuning, radiation pattern distortion, impedance mismatch etc which in turn degrades the signal quality. Also change in device orientation according to usage leads to power loss due to polarization mismatch. So when the signal quality degrades the system will sense & compute in an adaptive closed loop manner to actively optimise the radiation pattern according to scenarios. The design consist of (a) a sensor system (220) to determine the change in proximity environment [close vicinity] with property sensing, direction & position, device (antenna) orientation, user head & hand hold effect, usage scenarios or operating modes, location and accordingly generate the trigger signal (230); (b) a processing unit (150) for computing the interrupt control signal (140) according to trigger signal & existing signal quality parameters; (c) Smart active radiation pattern optimiser (120) that works based on control signal; (d) Antenna system (110) capable of achieving dynamic radiation pattern coupled with radiation pattern optimiser that actively shapes and controls the radiation pattern accordingly to improve signal quality and also restores radiation according to scenarios to optimise communication. Other aspects of the present invention are the same sensor system (220) is utilised to develop an application that guides the user locate & position the mobile device in living space to achieve optimised performance and also to protect the mobile device from theft.

WO2007/109451 discloses methods, systems, and apparatuses for a reader transceiver circuit are described. The reader transceiver circuit incorporates a frequency generator, such as a surface acoustic wave (SAW) oscillator. A reader incorporating the reader transceiver circuit is configured to read a tag at very close range, including while being in contact with the tag. The transceiver can be coupled to various host devices in a variety of ways, including being located in a RFID reader (e.g., mobile or fixed position), a computing device, a barcode reader, etc. The transceiver can be located in an RFID module that is attachable to a host device, can be configured in the host device, or can be configured to communicate with the host device over a distance.; The RFID module may include one or more antennas, such as a first antenna configured to receive a magnetic field component of an electromagnetic wave and a second antenna configured to receive an electric field component of an electromagnetic wave. The RFID module may include a detector that is configured to determine if the RFID module is positioned in proximity to an object, such as a RFID tag. The detector may operate as a trigger for the RFID module, to enable or trigger a function of the RFID module.

US2012/214412 discloses an electronic device may have a housing in which an antenna is mounted. An antenna window may be mounted in the housing to allow radio-frequency signals to be transmitted from the antenna and to allow the antenna to receive radio-frequency signals. Near-field radiation limits may be satisfied by reducing transmit power when an external object is detected in the vicinity of the dielectric antenna window and the antenna. A capacitive proximity sensor may be used in detecting external objects in the vicinity of the antenna. The proximity sensor and the antenna may be formed using integral antenna resonating element and proximity sensor capacitor electrode structures. These structures may be formed from identical first and second patterned conductive layers on opposing sides of a dielectric substrate. A transceiver and proximity sensor may be coupled to the structures through respective highpass and low-pass circuits.

US2012/135681 discloses a multi-mode communication system for a mobile phone including a plurality of antennas, a plurality of matching networks, each matching network connected to a respective one of said plurality of antennas, a plurality of near field devices, each near field device connected to a respective one of said plurality of matching networks, each pair of near field device and its associated matching network operative to either load modulate its antenna or generate an active magnetic field via its antenna, a plurality of switches, with one of said switches positioned between each of said matching networks and its respective antenna, and a controller of controlling the switched state of said plurality of switches such that one or more of said near field devices and their respective matching networks are selectively coupled to their respective antennas.

US2010/060432 discloses embodiments of the present invention provide for RFID systems that employ a plurality of battery assisted semi-passive and semi-active RFID tags with optimized system operation. The RFID tags feature receivers operating with multiple dynamic range states with square law mode for improved sensitivity, and part time active transmit in the tag to supplement it backscatter transmitter and thus support system operation taking full advantage of the sensitivity of the tag. In certain embodiments of the invention, tag sensitivity and reliability are further enhanced by the use pseudo-random sequence based receiver training and frame synchronizing.

The present invention is set out in the independent claims, with some optional features set out in the claims dependent thereto.

### Brief Description of the Drawings

FIG. 1 is a schematic block diagram of a communications system including a mobile wireless communications device with an NFC antenna matching control circuit in accordance with an example embodiment.
FIG. 2 is a schematic block diagram an alternative embodiment of the NFC antennas coupled to the NFC antenna matching control circuit for the mobile wireless communications device illustrated in FIG. 1.
FIG. 3 is a graph illustrating signal strength curves when the NFC control circuit operates in a reader mode and in a card emulation mode in accordance with an example embodiment.
FIG. 4 is a flowchart illustrating the steps for tuning the NFC antennas based on the different operating modes provided in FIG. 3.
FIG. 5 is a flowchart illustrating a method for operating the mobile wireless communications device provided in FIG. 1.

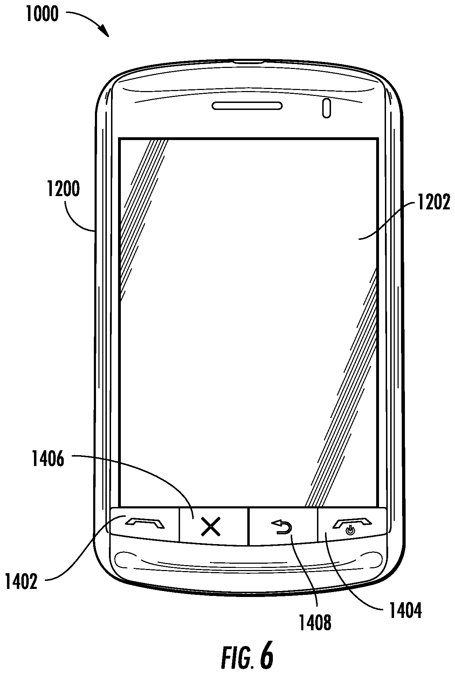

FIG. 6 is a front view of a mobile wireless communications device in accordance with another exemplary aspect.

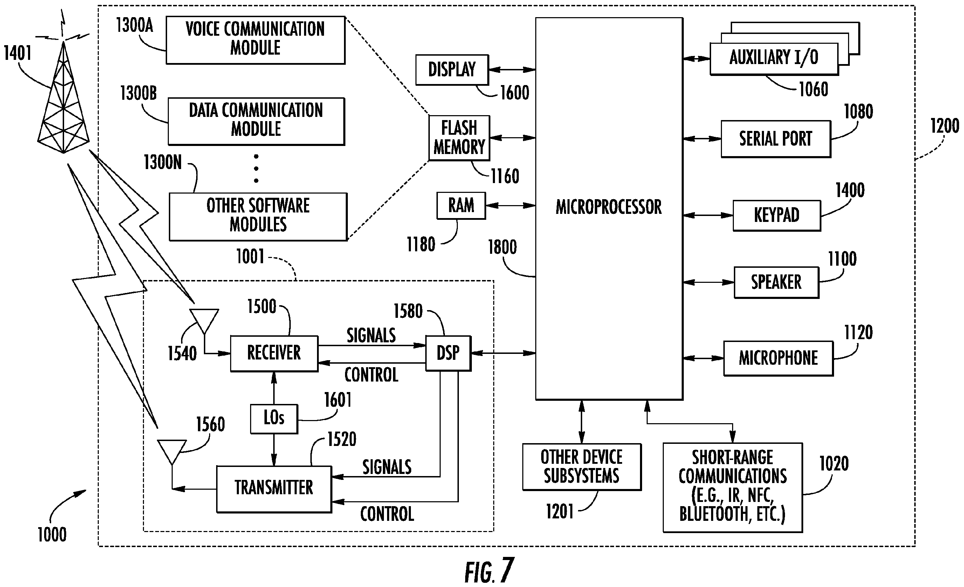

FIG. 7 is a schematic block diagram illustrating additional components that may be included in the mobile wireless communications device illustrated in FIG. 6.

### Detailed Description of the Preferred Embodiments

The present invention is defined by the claims and will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notations are used to indicate similar elements in alternative embodiments.

Generally speaking, a mobile wireless communications device includes a near-field communications (NFC) transceiver, a plurality of NFC antennas, and an NFC control circuit. The NFC transceiver may generate a received signal strength based on a received signal from an adjacent NFC device. The NFC control circuit may include an antenna switch circuit, a capacitance sensing circuit, and a processor. The antenna switch circuit may be coupled between the NFC transceiver and the plurality of NFC antennas. The capacitance sensing circuit may be coupled to the plurality of NFC antennas to determine capacitance values thereof. The processor may operate the antenna switch circuit based upon the received signal strength and the capacitance values.

The adjacent NFC device includes an NFC device antenna. The processor may be configured to determine at least one of the following based on the received signal strength and the capacitance values to operate the antenna switch: a distance to the NFC device antenna, a size of the NFC device antenna, and a center of the NFC device antenna.

The processor advantageously selects one or more of the NFC antennas in the mobile wireless communications device to improve interfacing with the NFC device antenna in the adjacent NFC device. Adequate reading distances may be maintained by the mobile wireless communications device regardless of the size of the NFC device antenna.

The capacitance sensing circuit advantageously senses proximity of the adjacent NFC device, as well as other objects, including a user's hand blocking the NFC device antenna in the NFC device. The capacitance sensing circuit may comprise a plurality of capacitance sensors, with each NFC antenna having a capacitance sensor associated therewith. Each capacitance sensor may comprise a pair of spaced apart plates, with a first plate adjacent a respective NFC antenna which functions as a second plate cooperating with the first plate. When the plurality of NFC antennas are embedded, then the first plate may be shared by the embedded NFC antennas.

The NFC control circuit may further comprise an NFC antenna tuning circuit coupled between the NFC transceiver and the antenna switch circuit to dynamically tune and match the NFC antennas with the NFC antenna in adjacent NFC device. The received signal strength may advantageously be used to determine if the NFC antennas need to be tuned.

The NFC control circuit may further comprise a signal rectification circuit coupled to the NFC antenna tuning circuit to provide a peak-to-peak voltage signal. The processor may control the NFC antenna tuning circuit based on the peak-to-peak voltage signal.

The NFC control circuit may further comprise a signal coupling circuit coupled to the antenna switch circuit and includes a reader mode output signal path and a card emulation mode output signal path. A card emulation mode dynamic control circuit may be coupled to the card emulation mode output signal path. A reader mode dynamic control circuit may be coupled to the reader mode output signal path. The processor may be configured to adjust a dynamic range of a signal received by the card emulation mode dynamic control circuit when the NFC control circuit is in a card emulation mode, and to adjust a dynamic range of a signal received by the reader mode dynamic control circuit when the NFC control circuit is in a reader mode. The signal received by the reader mode dynamic control circuit may include the received signal from the adjacent NFC device used by the NFC transceiver to generate the received signal strength.

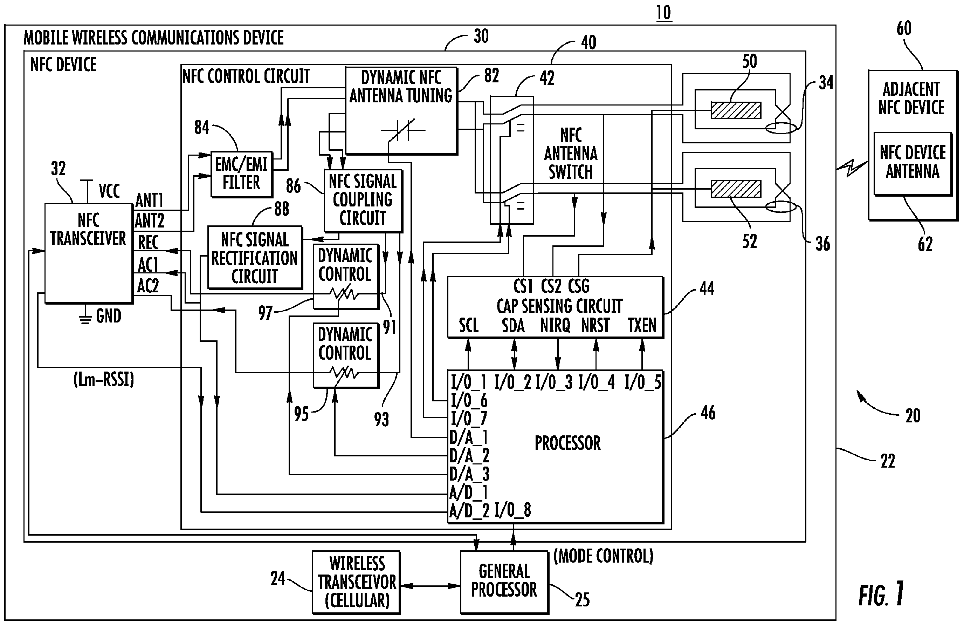

Referring initially to FIG. 1, a communications system **10** illustratively includes a mobile wireless communications device **20.** Example mobile wireless communications devices may include portable or personal media players (e.g., music or MP3 players, video players, etc.), portable gaming devices, portable or mobile telephones, smartphones, tablet computers, digital cameras, etc.

The mobile wireless communications device **20** is also generally referred to as a mobile device, and includes a portable housing **22,** and a wireless transceiver **24** and a general processor **25** carried by the portable housing **22.** The wireless transceiver **24** may comprise a cellular transceiver or other types of wireless communications transceivers, and may communicate any combination of voice and data, such as, for example, email. The general processor **25** interfaces between the wireless transceiver **24** and a near-field communications (NFC) device **30** also carried by the portable housing **22.**

The NFC device **30** is configured to communicate with an adjacent NFC device **60** or terminal that is part of the communications system **10** based upon proximity thereto using NFC communications. The adjacent NFC device **60** may be an NFC tag, an NFC-enabled mobile device, a smart poster, etc.

By way of background, NFC is a short-range wireless communications technology in which NFC-enabled devices **20, 60** are "swiped," "bumped" or otherwise moved in close proximity to communicate. In one non-limiting example implementation, NFC may operate at 13.56 MHz and with an effective range of about 10 cm, but other suitable versions of near-field communications which may have different operating frequencies, effective ranges, etc., for example, may also be used.

The NFC device **30** includes an NFC transceiver **32,** a plurality of NFC antennas **34, 36,** and an NFC control circuit **40.** The NFC transceiver **32** is configured to generate a received signal strength based on a received signal from the adjacent NFC device **60.** The received signal is a demodulated load modulation signal when the NFC device is in the reader mode.

The NFC control circuit **40** includes an antenna switch circuit **42** coupled between the NFC transceiver **30** and the NFC antennas **34, 36,** and a capacitance sensing circuit **44** coupled to the NFC antennas. The NFC control circuit **40** includes a processor **46** to operate the antenna switch circuit **42** based upon the received signal strength and the capacitance values provided by the capacitive sensing circuit **44.**

The capacitance sensing circuit **44** senses proximity of the adjacent NFC device **60,** as well as other objects, including a user's hand blocking the NFC device antenna **62.** The capacitance sensing circuit **44** includes a plurality of capacitance sensors, with each NFC antenna **34, 36** having a capacitance sensor associated therewith.

Each capacitance sensor includes a pair of spaced apart plates, with a first plate **50** or **52** adjacent a respective NFC antenna **34** or **36** and a second plate defined by an outer coil of the same respective NFC antenna **34** or **36.** That is, each respective NFC antenna functions as a plate for the capacitance sensor associated therewith.

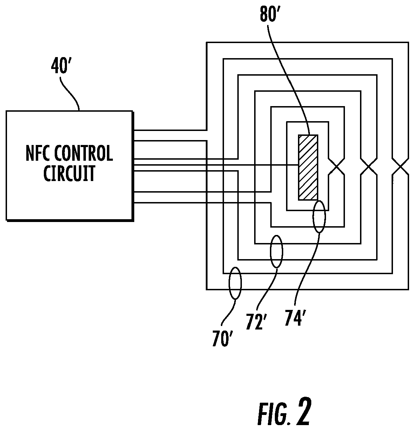

In an alternative embodiment, the NFC antennas may be embedded, as illustrated in FIG. 2. In this embodiment, all three NFC antennas **70', 72', 74'** share a common plate **80'.** The second plate of each capacitance sensor is defined **by an** outer coil of a respective one of the NFC antennas **70', 72', 74'.**

The adjacent NFC device **60** includes an NFC device antenna **62.** Depending on the configuration of the adjacent NFC device **60,** the NFC device **30** operates in either a reader mode or a card emulation mode. A mode control signal from the general processor **25** to the processor **46** in the NFC control circuit **40** places the NFC device **30** in either the reader mode or the card emulation mode.

The processor **46** is configured to determine at least one of the following for operating the antenna switch **42** based on the received signal strength of a received signal from the adjacent NFC device **60,** and the capacitance values detecting proximity of the adjacent NFC device **60:** a distance to the NFC device antenna **62,** a size of the NFC device antenna, and a center of the NFC device antenna.

The processor **46** advantageously selects one or more of the NFC antennas **50**, **52** to improve interfacing with the NFC device antenna **62** in the adjacent NFC device **60.** Since the reading distance can vary significantly between large and small size NFC device antennas, adequate reading distances may be maintained by the mobile wireless communications device **20** regardless of the size of the NFC device antenna **62.** For example, one of the illustrated NFC antennas **34** may be positioned at the top of the mobile wireless communications device **20,** whereas the other NFC antenna **36** NFC antennas **34** may be positioned at the bottom. Depending on the position of the mobile wireless communications device **20** with respect to the adjacent NFC device **60,** the top or bottom NFC antenna **34, 36** is appropriately selected. In some cases, both NFC antennas **34, 36** may be selected. In addition to the capacitance sensing circuit **44** sensing proximity of the adjacent NFC device **60,** other objects may be detected, including a user's hand holding the mobile wireless communications device **20.**

The NFC control circuit **40** further includes an NFC antenna tuning circuit **82** coupled between the NFC transceiver **32** and the antenna switch circuit **42.** The NFC antenna tuning circuit **82** provides different amplitude and phase modulated transmit signals in the reader mode, and different load modulation signals in the card emulation mode to the respective NFC antenna **34, 36.** The NFC antenna tuning circuit **82** also provides proper coupling between the NFC antennas **34, 36** and the NFC transceiver receive ports **REC** and **AC2.**

An EMC/EMI filter **84** is coupled between the NFC antenna tuning circuit **82** and the NFC transceiver **32.** The EMC/EMI filter **84** is typically a low pass filter to reduce harmonics and out-of-phase noise of an NFC signal transmitted at 13.56 MHz. The EMC/EMI filter **84** is coupled to **ANT1** and **ANT2,** which are differential outputs of the NFC transceiver **32.** The **ANT1** and **ANT2** differential outputs provide a modulated signal to an NFC antenna when the NFC device **30** is in the reader mode, and conducts load modulation when the NFC device **30** is in the card emulation mode. Alternatively, the **ANT1** and **ANT2** outputs may be configured as a common-mode output.

AN NFC signal coupling circuit **86** can properly couple and distribute NFC transmit and receive signals in both the reader and card emulation modes to the following inputs of the NFC transceiver **32: REC, AC1** and **AC2.** The **REC** input receives a load modulated signal during the reader mode. The **AC1** input is referred to as an energy harvest input, and receives a rectified signal from an NFC signal rectification circuit **88** in both the reader and card emulation modes. The **AC2** input is an NFC input in the card emulation mode, and receives a modulated signal from the adjacent NFC device **60** when operating as an NFC reader.

The processor **46** is used to conduct smart NFC signal control and antenna tuning based on the capacitance values provided by the capacitance sensing circuit **44,** a rectified signal provided from the NFC signal rectification circuit **88** to the **AC1** input, the load modulation receiver signal strength indicator (LM_RSSI), and the mode control signal placing the NFC device **30** in the reader mode or the card emulation mode.

The NFC signal rectification circuit **88** rectifies a signal from the NFC signal coupling circuit **86** and provides the rectified DC signal to the **AC1** input and to the **A/D_1** input of the processor **46.** The processor **46** digitizes this signal which is used as a sensing signal for the purpose of dynamic NFC antenna tuning. In particular, the rectified DC signal is a peak-to-peak voltage signal, and the processor **46** controls the NFC antenna tuning circuit **82** based on the peak-to-peak voltage signal.

The NFC signal coupling circuit **86** includes a reader mode output signal path **91** and a card emulation mode output signal path **93.** A card emulation mode dynamic control circuit **95** is coupled to the card emulation mode output signal path **93.** A reader mode dynamic control circuit **97** is coupled to the reader mode output signal path **91.**

The processor **46** adjusts a dynamic range of a signal received by the card emulation mode dynamic control circuit **95** when the NFC control circuit **40** is in a card emulation mode, and adjusts a dynamic range of a signal received by the reader mode dynamic control circuit **97** when the NFC control circuit is in a reader mode. The signal received by the reader mode dynamic control circuit **97** includes the received signal from the adjacent NFC device **60** used by the NFC transceiver **32** to generate the received signal strength.

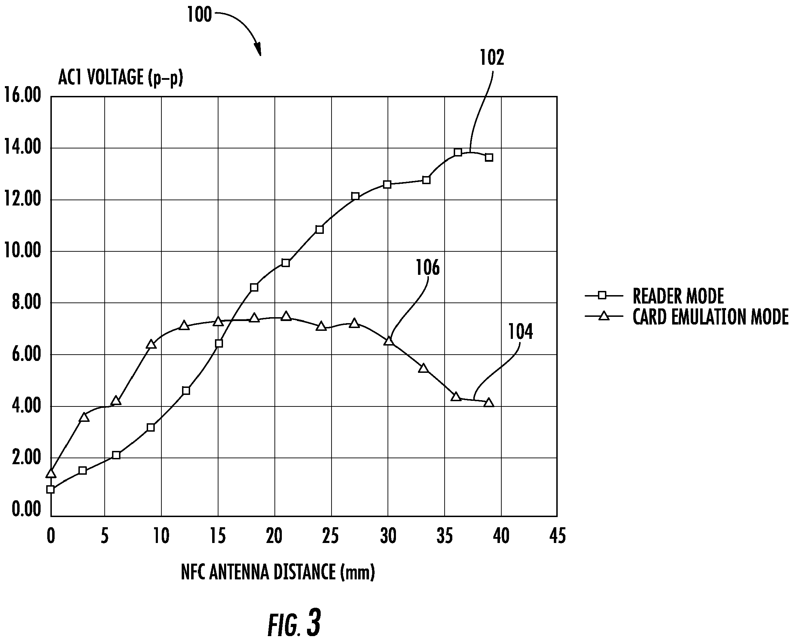

Referring now to FIG. 3, graph **100** illustrates signal strength curves when the NFC control circuit **40** operates in a reader mode and in a card emulation mode. Curve **102** corresponds to the NFC control circuit **40** operating in the reader mode, and curve **104** corresponds to the NFC control circuit operating in the card emulation mode. As readily appreciated by those skilled in the art, when the NFC antennas **34, 36** are detuned, the RF performance of the NFC device **40** operating as a reader and a card emulator is significantly degraded, and may even fail their proper NFC functions.

FIG. 3 thus demonstrates signal strength curves at input **AC1** of the NFC transceiver **32** with respect to an NFC antenna coupling distance in the two respective modes of operation. For curve **102** corresponding to the reader mode, the drop of AC1 peak-to-peak voltage is inversely proportional to the distance between the reader's antenna and the card emulator's antenna. The shorter the distance, the bigger the drop of AC1 peak-to-peak voltage. Therefore, the voltage at AC1 in the reader mode is an indication of how strong the magnetic field can be generated at an NFC antenna. This AC1 voltage drop is directly related to the detuned reader's NFC antenna by the NFC card emulator.

For curve **104** corresponding to the card emulation mode, the AC1 peak-to-peak voltage will drop when the distance is shortened. This is also due to the detuned card emulator's NFC antenna by the closely coupled reader's NFC antenna. On the other hand, when the distance is over 30 mm, as indicated at point **106,** the AC1 voltage slowly drops when the distance increases. As discussed above, the AC1 peak-to-peak voltage is an indicator of how much magnetic energy it can harvest from the reader. The longer the distance is, the less energy that can be collected.

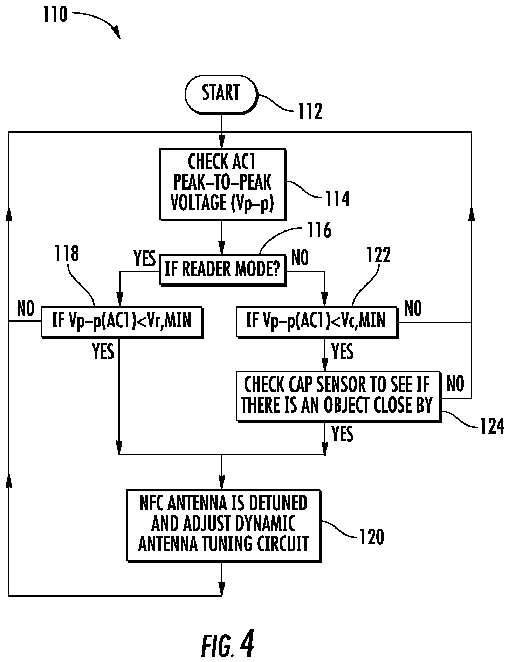

Therefore, the AC1 peak-to-peak voltage signal may be used as an antenna detuning indicator, as provided by the flow chart **110** in FIG. 4, whereas the capacitance values provided by the capacitance sensing circuit **44** may be used a distance indicator. This allows the processor **46** to correctly tell if the drop of AC1 peak-to-peak voltage (Vp-p) is due to the antenna detuning caused by the short distance and heavy antenna coupling, where Vr,min and Vc,min are the minimum Vp-p that set the thresholds to judge if an NFC antenna is to be tuned in the reader and card emulation modes, respectively.

Still referring to FIG. 4, from the start (Block **112**), the processor **46** checks the AC1 peak-to-peak voltage (Vp-p) at Block **114.** At Block **116,** a determination is made as to what mode the NFC control circuit **40** has been placed in. If in the reader mode, the AC1 peak-to-peak voltage is compared to a reader mode threshold at Block **118.** If the AC1 peak-to-peak voltage is less than the reader mode threshold, the process returns to Block **114** for another AC1 peak-to-peak voltage check. If the AC1 peak-to-peak voltage is greater than the reader mode threshold, the process continues to Block **120** where the NFC antenna is to be tuned. After antenna tuning, the process returns to Block **114** for another AC1 peak-to-peak voltage check.

If at Block **116,** a determination is made that the NFC control circuit **40** has been placed in the card emulator more, then the AC1 peak-to-peak voltage is compared to a card emulator mode threshold at Block **122.** If the AC1 peak-to-peak voltage is greater than the card emulator mode threshold, the process returns to Block **114** for another AC1 peak-to-peak voltage check. If the AC1 peak-to-peak voltage is less than the card emulator mode threshold, the process continues to Block **124** where a determination is made at the capacitance sensing circuit **44** on if an object in close proximity has been detected. If no object has been detected, then the process returns to Block **114.** If an object has been detected, then the NFC antenna is to be tuned at Block **120.** After antenna tuning, the process returns to Block **114** for another AC1 peak-to-peak voltage check.

As part of the NFC antenna tuning, either NFC antenna **34** or NFC antenna **36** will be selected, or both of the NFC antennas may be selected. This is provided by **I/O_6** and **I/O_7** of the processor **46** to achieve the goal of generating an increased magnetic field strength to an NFC card emulator. The dynamic control circuit is adjusted to achieve an improved receiving dynamic range at **REC.** Based on the selected NFC antenna(s) and the received signal strength of the received signal, the reader mode dynamic control circuit **97** is adjusted by the processor **46.**

The card emulator dynamic control circuit **95** is adjusted by the processor **46** to achieve an improved receiving dynamic range at input **AC2.** This adjustment is based on the received signal strength of the received signal, and the selected NFC antenna(s).

A strong load modulation via an NFC antenna coupling may be achieved by modulating **ANT1** and **ANT2** in the card emulation mode. Based on capacitance values from the capacitance sensing circuit **44** and the **AC2** reading, a determination can be made on a hand holding pattern by the user by switching both NFC antennas **34, 36** on one at a time. Then, the processor **46** checks **AC1** to see if the NFC antenna(s) are detuned. If yes, the NFC antenna is tuned to achieve an increased AC1 Vp-p. After that, a decision is made if both antennas should be switched on, or just one of them for improving load modulation performance. Finally, a load modulation is conducted via **ANT1** and **ANT2.**

As noted, the NFC device **30** may be configured to operate in the reader mode or in the card emulation mode. In addition, the NFC device **30** may also be configured to operate in a peer-to-peer mode. The different modes will now be discussed in greater detail.

In the reader mode, the NFC control circuit **40** is configured to detect the distance of the adjacent NFC device **60,** a size of the NFC device antenna **62** in the adjacent NFC device, a center of the NFC device antenna in the adjacent NFC device, and hand holding patterns of the user. Based on this information, the NFC antenna switch **42** selects NFC antenna **34** or NFC antenna **36,** or both. Next, a check is made to see if the selected NFC antenna is detuned. If detuned, the NFC antenna is tuned so as to generate an increased magnetic energy. The reader mode dynamic control circuit **95** is adjusted to improve receiving dynamic range at the **REC** input (i.e., the receiver input can handle an increased range (from low to high level) of a load modulated signal from the adjacent NFC device **60.**

In the card emulation mode, the NFC control circuit **40** is configured to detect the distance of the adjacent NFC device **60,** a size of the NFC device antenna **62** in the adjacent NFC device, a center of the NFC device antenna in the adjacent NFC device, and hand holding patterns of the user. Based on this information, the NFC antenna switch **42** selects NFC antenna **34** or NFC antenna **36,** or both. Next, a check is made to see if the selected NFC antenna is detuned. If detuned, the NFC antenna is tuned so as to generate an increased magnetic energy. The card emulator mode dynamic control circuit **97** is adjusted to improve receiving dynamic range at the **AC2** input. The strongest possible load modulation is provided via the NFC antenna coupling by modulating NFC antenna **34** and NFC antenna **36** (i.e., switching the NFC antennas **34, 36** on and off according to a load modulating signal).

In a peer-to-peer mode, depending on the negotiations between two mobile wireless communications devices, one mobile wireless communications device will become a NFC reader and the other mobile wireless communications device will be an NFC card emulator. In this mode, reference is directed to the flow chart in **110** in FIG. 4.

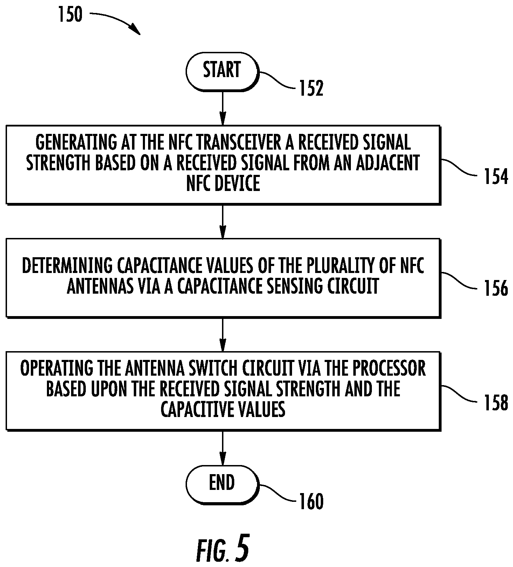

Another aspect is directed to a method for operating a mobile wireless communications device **20** as described above. Referring now to the flow chart **150** in FIG. 5, from the start (Block **152**), the method comprises at Block **154** generating at the NFC transceiver **32** a received signal strength based on a received signal from an adjacent NFC device **60.** Capacitance values of the plurality of NFC antennas **34, 36** are determined at Block **156** via the capacitance sensing circuit **44.** The antenna switch circuit **42** is operated at Block **158** via the processor **46** based upon the received signal strength and the capacitive values. The method ends at Block **160.**

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device comprising:
a near-field communications (NFC) transceiver configured to generate a received signal strength based on a received signal from an adjacent NFC device;
a plurality of NFC antennas; and
an NFC control circuit comprising
an antenna switch circuit coupled between said NFC transceiver and said plurality of NFC antennas,
a capacitance sensing circuit coupled to said plurality of NFC antennas and configured to determine capacitance values thereof, and
a processor configured to operate said antenna switch circuit to select one or more of the plurality of NFC antennas based upon the received signal strength and the capacitance values; wherein said NFC control circuit further comprises:
a signal coupling circuit coupled to said antenna switch circuit and comprising a reader mode output signal path and a card emulation mode output signal path;
a card emulation mode dynamic control circuit coupled to the card emulation mode output signal path; and
a reader mode dynamic control circuit coupled to the reader mode output signal path;
wherein said processor is configured to adjust a dynamic range of a signal received by said card emulation mode dynamic control circuit when said NFC control circuit is in a card emulation mode, and to adjust a dynamic range of a signal received by said reader mode dynamic control circuit when said NFC control circuit is in a reader mode; wherein the adjustment is based upon the received signal strength of the received signal, and the selected NFC antennas.

2. The mobile wireless communications device according to Claim 1 wherein said capacitance sensing circuit comprises a plurality of capacitance sensors, with each NFC antenna having a capacitance sensor associated therewith.

3. The mobile wireless communications device according to Claim 2 wherein each capacitance sensor comprises a first plate adjacent a respective NFC antenna which functions as a second plate cooperating with the first plate.

4. The mobile wireless communications device according to Claim 2 wherein the adjacent NFC device comprises an NFC device antenna; and wherein said processor is configured to determine at least one of the following based on the received signal strength and the capacitance values to operate said antenna switch: a distance to the NFC device antenna, a size of the NFC device antenna, and a center of the NFC device antenna.

5. The mobile wireless communications device according to Claim 1 wherein said NFC control circuit further comprises an NFC antenna tuning circuit coupled between said NFC transceiver and said antenna switch circuit.

6. The mobile wireless communications device according to Claim 4 wherein said NFC control circuit further comprises a signal rectification circuit coupled to said NFC antenna tuning circuit and configured to provide a peak-to-peak voltage signal; and wherein said processor is configured to control said NFC antenna tuning circuit based on the peak-to-peak voltage signal.

7. The mobile wireless communications device according to Claim 5 wherein the signal received by said reader mode dynamic control circuit includes the received signal from the adjacent NFC device used by said NFC transceiver to generate the received signal strength.

8. A method for operating a mobile wireless communications device comprising a near-field communications (NFC) transceiver; a plurality of NFC antennas; and an NFC control circuit comprising an antenna switch circuit coupled between the NFC transceiver and plurality of NFC antennas, a capacitance sensing circuit coupled to the plurality of NFC antennas, and a processor coupled to the antenna switch circuit and to the capacitive sensing circuit, the method comprising:
generating at the NFC transceiver a received signal strength based on a received signal from an adjacent NFC device;
determining capacitance values of the plurality of NFC antennas via a capacitance sensing circuit; and
operating the antenna switch circuit via the processor to select one or more of the plurality of NFC antennas based upon the received signal strength and the capacitive values; wherein the NFC control circuit further comprises a signal coupling circuit coupled to the antenna switch circuit and comprising a reader mode output signal path and a card emulation mode output signal path; a card emulation mode dynamic control circuit coupled to the card emulation mode output signal path; a reader mode dynamic control circuit coupled to the reader mode output signal path; the method further comprising: operating the processor to adjust a dynamic range of a signal received by the card emulation mode dynamic control circuit when the NFC control circuit is in a card emulation mode; and
operating the processor to adjust a dynamic range of a signal received by the reader mode dynamic control circuit when the NFC control circuit is in a reader mode.

9. The method according to Claim 8 wherein the capacitance sensing circuit comprises a plurality of capacitance sensors, with each NFC antenna having a capacitance sensor associated therewith.

10. The method according to Claim 9 wherein each capacitance sensor comprises a pair of spaced apart plates, with first plate adjacent a respective NFC antenna and
a first plate adjacent a respective NFC antenna which functions as a second plate cooperating with the first plate.

11. The method according to Claim 9 wherein the adjacent NFC device comprises an NFC device antenna; and wherein operating the antenna switch further comprises operating the processor to determine at least one of the following based on the received signal strength and the capacitance values to operate the antenna switch: a distance of the adjacent NFC device, a size of the NFC device antenna, and a center of the NFC device antenna.

12. The method according to Claim 9 wherein the NFC control circuit further comprises an NFC antenna tuning circuit coupled between the NFC transceiver and the antenna switch circuit, the method further comprising controlling the NFC antenna tuning circuit to tune at least one of the plurality of NFC antennas.

13. The method according to Claim 8 wherein the NFC control circuit further comprises a signal rectification circuit coupled to the NFC antenna tuning circuit to provide a peak-to-peak voltage signal; and wherein controlling the NFC antenna tuning circuit is based on the peak-to-peak voltage signal.

## Patentansprüche

1. Mobildrahtloskommunikationsvorrichtung, die Folgendes umfasst:
einen Nahfeldkommunikation(NFC: Near-Field Communication)-Sendeempfänger, der zum Erzeugen einer Empfangenes-Signal-Stärke basierend auf einem empfangenen Signal von einer angrenzenden NFC-Vorrichtung konfiguriert ist;
mehrere NFC-Antennen; und
einen NFC-Steuerschaltkreis, der Folgendes umfasst:
einen Antennenumschaltschaltkreis, der zwischen den NFC-Sendeempfänger und die mehreren NFC-Antennen gekoppelt ist,
einen Kapazitätserfassungsschaltkreis, der mit den mehreren NFC-Antennen gekoppelt ist und zum Bestimmen von Kapazitätswerten von diesen konfiguriert ist, und
einen Prozessor, der zum Betreiben des Antennenumschaltschaltkreises dazu, eine oder mehrere der mehreren NFC-Antennen basierend auf der Empfangenes-Signal-Stärke und den Kapazitätswerten auszuwählen, konfiguriert ist; wobei der NFC-Steuerschaltkreis ferner Folgendes umfasst:
einen Signalkopplungsschaltkreis, der mit dem Antennenumschaltschaltkreis gekoppelt ist und einen Lesegerätmodusausgangssignalpfad und einen Kartenemulationsmodusausgangssignalpfad umfasst;
einen Kartenemulationsmodusdynamiksteuerschaltkreis, der mit dem Kartenemulationsmodusausgangssignalpfad gekoppelt ist; und
einen Lesegerätmodusdynamiksteuerschaltkreis, der mit dem Lesegerätmodusausgangssignalpfad gekoppelt ist;
wobei der Prozessor zum Anpassen eines Dynamikbereichs eines Signals, das durch den Kartenemulationsmodusdynamiksteuerschaltkreis empfangen wird, wenn sich der NFC-Steuerschaltkreis in einem Kartenemulationsmodus befindet, und zum Anpassen eines Dynamikbereichs eines Signals, das durch den Lesegerätmodusdynamiksteuerschaltkreis empfangen wird, wenn sich der NFC-Steuerschaltkreis in einem Lesegerätmodus befindet, konfiguriert ist; wobei die Anpassung auf der Empfangenes-Signal-Stärke des empfangenen Signals und den ausgewählten NFC-Antennen basiert.

2. Mobildrahtloskommunikationsvorrichtung nach Anspruch 1, wobei der Kapazitätserfassungsschaltkreis mehrere Kapazitätssensoren umfasst, wobei jede NFC-Antenne einen mit ihr assoziierten Kapazitätssensor aufweist.

3. Mobildrahtloskommunikationsvorrichtung nach Anspruch 2, wobei jeder Kapazitätssensor eine erste Platte angrenzend an eine jeweilige NFC-Antenne, die als eine zweite mit der ersten Platte zusammenwirkende Platte fungiert, umfasst.

4. Mobildrahtloskommunikationsvorrichtung nach Anspruch 2, wobei die angrenzende NFC-Vorrichtung eine NFC-Vorrichtung-Antenne umfasst; und wobei der Prozessor zum Bestimmen von wenigstens einem von dem Folgenden basierend auf der Empfangenes-Signal-Stärke und den Kapazitätswerten zum Betreiben des Antennenumschalters konfiguriert ist: eines Abstands zu der NFC-Vorrichtung-Antenne, einer Größe der NFC-Vorrichtung-Antenne und eines Zentrums der NFC-Vorrichtung-Antenne.

5. Mobildrahtloskommunikationsvorrichtung nach Anspruch 1, wobei der NFC-Steuerschaltkreis ferner einen NFC-Antenne-Abstimmungsschaltkreis umfasst, der zwischen den NFC-Sendeempfänger und den Antennenumschaltschaltkreis gekoppelt ist.

6. Mobildrahtloskommunikationsvorrichtung nach Anspruch 4, wobei der NFC-Steuerschaltkreis ferner einen Signalgleichrichtungsschaltkreis umfasst, der mit dem NFC-Antenne-Abstimmungsschaltkreis gekoppelt ist und zum Bereitstellen eines Spitze-Spitze-Spannung-Signals konfiguriert ist; und wobei der Prozessor zum Steuern des NFC-Antenne-Abstimmungsschaltkreises basierend auf dem Spitze-Spitze-Spannung-Signal konfiguriert ist.

7. Mobildrahtloskommunikationsvorrichtung nach Anspruch 5, wobei das Signal, das durch den Lesegerätmodusdynamiksteuerschaltkreis empfangen wird, das empfangene Signal von der angrenzenden NFC-Vorrichtung beinhaltet, welches durch den NFC-Sendeempfänger zum Erzeugen der Empfangenes-Signal-Stärke verwendet wird.

8. Verfahren zum Betreiben einer Mobildrahtloskommunikationsvorrichtung, die Folgendes umfasst: einen Nahfeldkommunikation(NFC)-Sendeempfänger; mehrere NFC-Antennen; und einen NFC-Steuerschaltkreis, der einen Antennenumschaltschaltkreis, der zwischen den NFC-Sendeempfänger und die mehreren NFC-Antennen gekoppelt ist, einen Kapazitätserfassungsschaltkreis, der mit den mehreren NFC-Antennen gekoppelt ist, und einen Prozessor, der mit dem Antennenumschaltschaltkreis und mit dem kapazitiven Erfassungsschaltkreis gekoppelt ist, umfasst, wobei das Verfahren Folgendes umfasst:
Erzeugen einer Empfangenes-Signal-Stärke basierend auf einem empfangenen Signal von einer angrenzenden NFC-Vorrichtung bei dem NFC-Sendeempfänger;
Bestimmen von Kapazitätswerten der mehreren NFC-Antennen mittels eines Kapazitätserfassungsschaltkreises; und
Betreiben des Antennenumschaltschaltkreises mittels des Prozessors dazu, eine oder mehrere der mehreren NFC-Antennen basierend auf der Empfangenes-Signal-Stärke und den kapazitiven Werten auszuwählen; wobei der NFC-Steuerschaltkreis ferner Folgendes umfasst: einen Signalkopplungsschaltkreis, der mit dem Antennenumschaltschaltkreis gekoppelt ist und einen Lesegerätmodusausgangssignalpfad und einen Kartenemulationsmodusausgangssignalpfad umfasst; einen Kartenemulationsmodusdynamiksteuerschaltkreis, der mit dem Kartenemulationsmodusausgangssignalpfad gekoppelt ist; einen Lesegerätmodusdynamiksteuerschaltkreis, der mit dem Lesegerätmodusausgangssignalpfad gekoppelt ist;
wobei das Verfahren ferner Folgendes umfasst: Betreiben des Prozessors zum Anpassen eines Dynamikbereichs eines Signals, das durch den Kartenemulationsmodusdynamiksteuerschaltkreis empfangen wird, wenn sich der NFC-Steuerschaltkreis in einem Kartenemulationsmodus befindet; und
Betreiben des Prozessors zum Anpassen eines Dynamikbereichs eines Signals, das durch den Lesegerätmodusdynamiksteuerschaltkreis empfangen wird, wenn sich der NFC-Steuerschaltkreis in einem Lesegerätmodus befindet.

9. Verfahren nach Anspruch 8, wobei der Kapazitätserfassungsschaltkreis mehrere Kapazitätssensoren umfasst, wobei jede NFC-Antenne einen mit ihr assoziierten Kapazitätssensor aufweist.

10. Verfahren nach Anspruch 9, wobei jeder Kapazitätssensor ein Paar beabstandeter Platten umfasst, wobei eine erste Platte an eine jeweilige NFC-Antenne angrenzt, und
wobei eine erste Platte an eine jeweilige NFC-Antenne angrenzt, die als eine zweite mit der ersten Platte zusammenwirkende Platte fungiert.

11. Verfahren nach Anspruch 9, wobei die angrenzende NFC-Vorrichtung eine NFC-Vorrichtung-Antenne umfasst;
und wobei Betreiben des Antennenumschalters ferner Betreiben des Prozessors zum Bestimmen von wenigstens einem von dem Folgenden basierend auf der Empfangenes-Signal-Stärke und den Kapazitätswerten zum Betreiben des Antennenumschalters umfasst: eines Abstands zu der angrenzenden NFC-Vorrichtung, einer Größe der NFC-Vorrichtung-Antenne und eines Zentrums der NFC-Vorrichtung-Antenne.

12. Verfahren nach Anspruch 9, wobei der NFC-Steuerschaltkreis ferner einen NFC-Antenne-Abstimmungsschaltkreis umfasst, der zwischen den NFC-Sendeempfänger und den Antennenumschaltschaltkreis gekoppelt ist, wobei das Verfahren ferner Steuern des NFC-Antenne-Abstimmungsschaltkreises zum Abstimmen wenigstens einer der mehreren NFC-Antennen umfasst.

13. Verfahren nach Anspruch 8, wobei der NFC-Steuerschaltkreis ferner einen Signalgleichrichtungsschaltkreis umfasst, der mit dem NFC-Antenne-Abstimmungsschaltkreis gekoppelt ist, um ein Spitze-Spitze-Spannung-Signal bereitzustellen; und wobei Steuern des NFC-Antenne-Abstimmungsschaltkreises auf dem Spitze-Spitze-Spannung-Signal basiert.

## Revendications

1. Dispositif de communications sans fil mobile comprenant :
un émetteur-récepteur de communications en champ proche (NFC) configuré pour générer une intensité de signal reçue sur la base d'un signal reçu en provenance d'un dispositif NFC adjacent ;
une pluralité d'antennes NFC ; et
un circuit de commande NFC comprenant :
un circuit de commutation d'antenne couplé entre ledit émetteur-récepteur NFC et ladite pluralité d'antenne NFC,
un circuit de détection de capacité couplé à ladite pluralité d'antennes NFC et configuré pour déterminer des valeurs de capacité de celles-ci, et
un processeur configuré pour actionner ledit circuit de commutation d'antenne pour sélectionner une ou plusieurs de la pluralité d'antennes NFC sur la base de l'intensité de signal reçue et des valeurs de capacité ;
dans lequel ledit circuit de commande NFC comprend en outre :
un circuit de couplage de signal couplé audit circuit de commutation d'antenne et comprenant un trajet de signal de sortie de mode lecteur et un trajet de signal de sortie de mode d'émulation de carte ;
un circuit de commande dynamique de mode d'émulation de carte couplé au trajet de signal de sortie de mode d'émulation de carte ; et
un circuit de commande dynamique de mode lecteur couplé au trajet de signal de sortie de mode lecteur ;
dans lequel ledit processeur est configuré pour ajuster une gamme dynamique d'un signal reçu par ledit circuit de commande dynamique de mode d'émulation de carte lorsque ledit circuit de commande NFC est dans un mode d'émulation de carte, et pour ajuster une gamme dynamique d'un signal reçu par ledit circuit de commande dynamique de mode lecteur lorsque le circuit de commande NFC est dans un mode lecteur ; où l'ajustement est basé sur l'intensité de signal reçue du signal reçu, et les antennes NFC sélectionnées.

2. Dispositif de communications sans fil mobile selon la revendication 1, dans lequel ledit circuit de détection de capacité comprend une pluralité de capteurs de capacité, chaque antenne NFC ayant un capteur de capacité associé à celle-ci.

3. Dispositif de communications sans fil mobile selon la revendication 2, dans lequel chaque capteur de capacité comprend une première plaque adjacente à une antenne NFC respective qui fonctionne en tant que seconde plaque coopérant avec la première plaque.

4. Dispositif de communications sans fil mobile selon la revendication 2, dans lequel le dispositif NFC adjacent comprend une antenne de dispositif NFC ; et dans lequel ledit processeur est configuré pour déterminer au moins un de ce qui suit sur la base de l'intensité de signal reçue et des valeurs de capacité pour actionner ledit commutateur d'antenne : une distance jusqu'à l'antenne de dispositif NFC, une taille de l'antenne de dispositif NFC, et un centre de l'antenne de dispositif NFC.

5. Dispositif de communications sans fil mobile selon la revendication 1, dans lequel ledit circuit de commande NFC comprend en outre un circuit d'accord d'antenne NFC couplé entre ledit émetteur-récepteur NFC et ledit circuit de commutation d'antenne.

6. Dispositif de communications sans fil mobile selon la revendication 4, dans lequel ledit circuit de commande NFC comprend en outre un circuit de redressement de signal couplé audit circuit d'accord d'antenne NFC et configuré pour fournir un signal de tension crête à crête ; et dans lequel ledit processeur est configuré pour commander ledit circuit d'accord d'antenne NFC sur la base du signal de tension crête à crête.

7. Dispositif de communications sans fil mobile selon la revendication 5, dans lequel le signal reçu par ledit circuit de commande dynamique de mode lecteur inclut le signal reçu en provenance du dispositif NFC adjacent utilisé par ledit émetteur-récepteur NFC pour générer l'intensité de signal reçue.

8. Procédé pour faire fonctionner un dispositif de communications sans fil mobile comprenant un émetteur-récepteur de communications en champ proche (NFC) ; une pluralité d'antennes NFC ; et un circuit de commande NFC comprenant un circuit de commutation d'antenne couplé entre l'émetteur-récepteur NFC et la pluralité d'antennes NFC, un circuit de détection de capacité couplé à la pluralité d'antennes NFC, et un processeur couplé au circuit de commutation d'antenne et au circuit de détection capacitif, le procédé comprenant :
la génération au niveau de l'émetteur-récepteur NFC d'une intensité de signal reçue sur la base d'un signal reçu en provenance d'un dispositif NFC adjacent ;
la détermination de valeurs de capacité de la pluralité d'antennes NFC via un circuit de détection de capacité ; et
l'actionnement du circuit de commutation d'antenne via le processeur pour sélectionner une ou plusieurs de la pluralité d'antennes NFC sur la base de l'intensité de signal reçue et des valeurs capacitives ;
où le circuit de commande NFC comprend en outre un circuit de couplage de signal couplé au circuit de commutation d'antenne et comprenant un trajet de signal de sortie de mode lecteur et un trajet de signal de sortie de mode d'émulation de carte ; un circuit de commande dynamique de mode d'émulation de carte couplé au trajet de signal de sortie de mode d'émulation de carte ; un circuit de commande dynamique de mode lecteur couplé au trajet de signal de sortie de mode lecteur ;
le procédé comprenant en outre : l'actionnement du processeur pour ajuster une gamme dynamique d'un signal reçu par le circuit de commande dynamique de mode d'émulation de carte lorsque le circuit de commande NFC est dans un mode d'émulation de carte ; et
l'actionnement du processeur pour ajuster une gamme dynamique d'un signal reçu par ledit circuit de commande dynamique de mode lecteur lorsque le circuit de commande NFC est dans un mode lecteur.

9. Procédé selon la revendication 8, dans lequel le circuit de détection de capacité comprend une pluralité de capteurs de capacité, chaque antenne NFC ayant un capteur de capacité associé à celle-ci.

10. Procédé selon la revendication 9, dans lequel chaque capteur de capacité comprend une paire de plaques espacées, avec une première plaque adjacente à une antenne NFC respective et une première plaque adjacente à une antenne NFC respective qui fonctionne en tant que seconde plaque coopérant avec la première plaque.

11. Procédé selon la revendication 9, dans lequel le dispositif NFC adjacent comprend une antenne de dispositif NFC ; et dans lequel l'actionnement du commutateur d'antenne comprend en outre l'actionnement du processeur pour déterminer au moins un de ce qui suit sur la base de l'intensité de signal reçue et des valeurs de capacité pour actionner le commutateur d'antenne : une distance du dispositif NFC adjacent, une taille de l'antenne de dispositif NFC, et un centre de l'antenne de dispositif NFC.

12. Procédé selon la revendication 9, dans lequel le circuit de commande NFC comprend en outre un circuit d'accord d'antenne NFC couplé entre l'émetteur-récepteur NFC et le circuit de commutation d'antenne, le procédé comprenant en outre la commande du circuit d'accord d'antenne NFC pour accorder au moins l'une de la pluralité d'antennes NFC.

13. Procédé selon la revendication 8, dans lequel le circuit de commande NFC comprend en outre un circuit de redressement de signal couplé au circuit d'accord d'antenne NFC pour fournir un signal de tension crête à crête ; et dans lequel la commande du circuit d'accord d'antenne NFC est basée sur le signal de tension crête à crête.
